# EUROPÄISCHE PATENTSCHRIFT

(11) **EP 2 188 639 B1**
(45) Veröffentlichungstag und Bekanntmachung des Hinweises auf die Patenterteilung: **16.03.2016**
(21) Anmeldenummer: 08801288.5
(22) Anmeldetag: 03.09.2008
(51) Int. Cl.: G01P 3/44

(54) **MESSANORDNUNG FÜR EINE GELAGERTE WELLE**
MEASUREMENT ARRANGEMENT FOR A MOUNTED SHAFT
DISPOSITIF DE MESURE POUR UN ARBRE MONTÉ SUR PALIER

(30) Priorität: 12.09.2007 DE 102007043392
(43) Veröffentlichungstag der Anmeldung: 26.05.2010
(73) Patentinhaber: Schaeffler Technologies AG & Co. KG, 91074 Herzogenaurach (DE)
(72) Erfinder: DUPPE, Carsten, 97273 Kürnach (DE)
(86) Internationale Anmeldenummer: PCT/DE2008/001481
(87) Internationale Veröffentlichungsnummer: WO 2009/033458

(56) Entgegenhaltungen:
- WO-A-2007/049602
- US-A1- 2004 036 631

## Beschreibung

### Gebiet der Erfindung

Die Erfindung betrifft eine Messanordnung nach dem Oberbegriff des Anspruchs 1 für eine in einem Lager gelagerte Welle.

WO 2006/013092 A1 beschreibt eine Messanordnung zur Erfassung der Drehzahl, der Drehrichtung und des Winkels sowie des Drehmomentes einer gelagerten Welle unter Ausnutzung des magnetostriktiven Effektes. Bei dem magnetostriktiven Effekt handelt es sich um die Beobachtung, dass das Auftreten einer Magnetisierung in einem Festkörper eine Längenänderung hervorruft, bzw., in Umkehrung des Effektes, dass eine Längenänderung oder allgemeiner eine mechanische Beanspruchung eines magnetisierten Festkörpers eine Änderung der Magnetisierung des Festkörpers erzeugt. Unter Ausnutzung der letztgenannten Erscheinung lassen sich bei der Drehung der Welle in dem Korpus der Welle auftretende mechanische Spannungen erfassen, so dass auf Kenngrösen wie die Drehzahl, die Drehrichtung, sowie das Drehmoment der Welle geschlossen werden kann. Die Messanordnung der genannten Druckschrift sieht vor, einen Abschnitt der Welle mit einer Permanentmagnetisierung als magnetische Codierung zu versehen, so dass in der Welle auftretende mechanische Spannungen das durch die Codierung vorliegende Magnetfeld ausserhalb des Korpus der Welle verändern. Der mit der magnetischen Codierung versehene Abschnitt der Welle ist damit als Signalgeber der Messanordnung ausgebildet. Ausserhalb des Korpus der Welle, aber in unmittelbarer Nähe zu der Welle, ist mindestens ein Signalempfänger angeordnet, beispielsweise eine magnetische Spule, die das Magnetfeld der Codierung, insbesondere auch eine Änderung des Magnetfeldes der Codierung bei der mechanischen Beanspruchung der Welle, ausserhalb des Korpus der Welle erfasst. In einer Fortbildung der Messanordnung der genannten Druckschrift ist vorgesehen, dass die Codierung zweilagig ausgebildet ist, wobei in dem magnetisierten Abschnitt der Welle ein erster, oberflächennaher Bereich eine erste Magnetisierung und ein zweiter, oberflächenferner Bereich eine zweite Magnetisierung aufweist, so dass in einem spannungsfreien Zustand der Welle die erste Magnetisierung und die zweite Magnetisierung nach Richtung und Betrag derart eingestellt sind, dass ausserhalb des Korpus der Welle das Magnetfeld an der Stelle des Signalempfängers gerade verschwindet, während bei Auftreten von mechanischen Spannungen in dem Korpus der Welle ausserhalb des Korpus der Welle ein Magnetfeld auftritt. Nachteilig ist, dass die genannte Messanordnung eine mindestens abschnittsweise magnetisierbare Welle erfordert. Das Verfahren ist nicht ohne weiteres auf in einem Wälzlager gelagerte Wellen anwendbar, da der Signalempfänger in unmittelbarer Nähe des magnetisierten Abschnitts der Welle angeordnet sein muss, allerdings der magnetisierte Abschnitt in einem der Lagerringe aufgenommen ist. In diesem Fall ist es auch ungünstig, den Signalempfänger in der Welle, zwischen den Lagerringen, anzuordnen. Es ist ebenfalls nicht möglich, den magnetisierten Abschnitt der Welle an einem Ende der Welle anzuordnen, da an einem Ende des Korpus das Magnetfeld des Korpus der Welle durch Streufelder dominiert wird, die keinen sicheren Rückschluss auf die Magnetisierung des Korpus der Welle erlauben. Es ist weiter ungünstig, den magnetisierten Abschnitt zwar ausserhalb des die Welle lagernden Lagerrings des Wälzlagers, aber unmittelbar anschliessend an den in dem Lagerring gelagerten Abschnitt der Welle anzuordnen, da das Magnetfeld des Korpus der Welle durch den Lagerring, der seinerseits mechanische Spannungen in dem Korpus der Welle hervorruft und ebenfalls aus einem magnetischen oder zumindest magnetisierbaren Material besteht, überlagert wird.

US 4,688,951 B beschreibt ein Wälzlager mit einem Innenring und einem Außenring, wobei eine Messanordnung vorgesehen ist, die die relative Drehbewegung der beiden Lagerringe erfasst. Dazu ist an dem Außenring über ein erstes Deflektorblech ein magnetischer Sensor sowie ein Magnet und an dem Innenring eine zwei Magnetspulen angebracht. Passiert eine der Magnetspulen den Magneten, wird eine Spannung in der Magnetspule induziert, die die andere Magnetspule beaufschlagt, so dass das Magnetfeld der anderen Magnetspule von dem magnetischen Sensor erfasst wird. Über die beiden im Querschnitt L-förmigen Deflektorbleche sind der magnetische Sensor, der Magnet und die beiden Magnetspulen an dem jeweiligen Lagerring angebracht, wobei nachteilig ist, dass im Innern des Lagers ein hoher Platz beansprucht wird. Aufgrund der beidseits der Wälzkörper angebrachten Deflektorbleche weist das Lager in Richtung der Lagerachse eine Längserstreckung auf, die die Abmessung der Wälzkörper deutlich übertrifft. Weiter ungünstig ist, dass Spalte ausgebildet werden, durch die Schmutz in das Lager eindringen kann. Ungünstig ist weiter, dass der Magnet ein sehr hohes Magnetfeld aufweist, aufgrund dessen Verschmutzungen in das im wesentlichen ungeschützte Lager gezogen werden können. Nachteilig ist weiter, dass eine Kabelverbindung vorgesehen sein muss, um die beiden Magnetspulen zu verbinden. Die Messanordnung gibt keine Möglichkeit, eine axiale Verschiebung der aufgenommenen Welle zu erfassen.

WO 20071049602 A1 (Abstract) beschreibt eine Messanordnung für ein Radlager mit einer Abdichtung, bei dem ein Sensorelement in der Abdichtung angeordnet ist und einem magnetischen Encoder mit einem multipolaren magnetischen Ring, einem Pulsar-Ring, gegenüberliegt. Die Abdichtung ist als Spannring ausgebildet ist, der aus einem Material mit einem geringen Wasserabsorptionskoeffizienten besteht.

US 2004/036631 A1 beschreibt einen magnetischen Encoderring. Der Encoderring besteht aus einem ferritischen Ring, der umlaufend alternierend mit einem Nord-/Südpol magnetisiert ist.

### Aufgabe der Erfindung

Es ist die Aufgabe der Erfindung, die eingangs genannte Messanordnung für eine in einem Wälz- oder Gleitlager gelagerte Welle verfügbar zu machen.

### Zusammenfassung der Erfindung

Diese Aufgabe wird für die genannte Messanordnung erfindungsgemäss mit den Merkmalen von Anspruch 1 gelöst.

Aufgrund der Anordnung der magnetische Codierung an einem Bestandteil des Wälzlagers, nicht an dem Korpus der Welle selbst, ist es möglich, den magnetostriktiven Effekt auch für Wellen auszunutzen, deren Korpus nicht aus einem magnetischen oder magnetisierbaren Material hergestellt ist. Weiter wird es möglich, die Welle, auch wenn deren Korpus aus einem magnetisierbaren Material bestehen sollte, über ihre gesamte Erstreckung magnetfeldfrei zu halten, was für bestimmte Anwendungen beispielsweise in der Medizintechnik, beispielsweise bei NMR-Messungen, erforderlich sein kann.

Mechanische Spannungen in dem Korpus der Welle übertragen sich aufgrund der festen Einspannung der Welle in das diese lagernde Wälzlager und können, statt an dem Korpus der Welle selbst, alternativ an dem mit der Welle verbundenen Bestandteil des Wälzlagers ermittelt werden. Insbesondere besteht für das Bestandteil des Wälzlagers hinreichend Raum, um den Empfänger der Messanordnung, beispielsweise den mindestens einen Magneten, anzuordnen.

Als vorteilhaft erweist sich weiter, dass der von der Messanordnung umfasste Empfänger in einer Verlängerung der Achse der Welle angeordnet sein kann, also nicht mehr parallel zu dem mit der Codierung versehenen Abschnitt und damit parallel zu dem Korpus der Welle angeordnet sein muss. Durch die Anordnung des Empfängers in der Verlängerung der Achse der Welle ergibt sich ein konstruktiver Freiheitsgrad, der beispielsweise eine effektive Raumausnutzung ermöglicht. Dabei kann der Empfänger an einem der Bestandteile des Wälzlagers oder an dem Bauteil, das das Wälzlager aufnimmt, angeordnet sein.

Aufgrund der Anordnung der magnetischen Codierung an einer Stirnfläche des Bestandteils des Lagers greift die magnetische Codierung nicht in den Raum zwischen die beiden gelagerten Teile ein. Als 'Stirnfläche' wird dabei jede Fläche eines Lagerteils angesehen, das eine Ebene bildet, auf der die Lagerachse im wesentlichen senkrecht steht. Bei einer Lagerdichtung gelten die nach innen bzw. außen weisenden Seiten der Dichtung jeweils als Stirnfläche der Dichtung.

Vorzugsweise ist vorgesehen, dass das Wälzlager einen Aussenring bzw. einen Innenring als Bestandteil umfasst, und dass die magnetische Codierung an einer Stirnfläche des Aussenrings bzw. des Innenrings angeordnet ist. Die genannten Stirnflächen sind von ausserhalb des Lagers leicht zugänglich, so dass dort der die Signale der magnetischen Codierung auslesende Empfänger einfach eingebaut werden kann. Die genannten Stirnflächen sind im Gegensatz zu den zylindrischen Innenflächen des Innen- bzw. Außenrings eben, so dass die magnetische Codierung, insbesondere wenn diese durch einen Permanentmagneten oder einen Schwingkreis ausgebildet ist, leicht anzubringen ist.

Vorzugsweise ist vorgesehen, dass die magnetische Codierung eine in der Stirnfläche des Aussen- bzw. Innenrings radial umlaufende Abfolge von Bereichen umfasst, wobei je zwei benachbarte Bereiche eine unterschiedliche Magnetisierung aufweisen. Die nach Art von Kreissektoren ausgebildeten Bereiche stellen eine einfach herzustellende magnetische Codierung dar, wobei die Anzahl der Bereiche einstellbar ist, so dass die räumliche Auflösung der magnetischen Codierung erhöht werden kann.

Alternativ oder ergänzend zu einer Anordnung der magnetischen Codierung an einem der Lagerringe, Innen- oder Aussenring, des Wälzlagers, ist vorzugsweise vorgesehen, dass das Wälzlager als Bestandteil eine Dichtung umfasst, und dass die magnetische Codierung an einer Seite der Dichtung angeordnet ist. Ist insbesondere die magnetische Codierung an der nach aussen weisenden Seite der Dichtung angeordnet, ist die magnetische Codierung von aussen leicht zugänglich. Ausserdem erweist sich als günstig, dass bereits eingebaute Wälzlager durch Austauschen der Dichtung mit einer magnetischen Codierung nachträglich versehen lassen.

Ist die magnetische Codierung an einer Fläche der Dichtung angeordnet, ist vorzugsweise vorgesehen, dass die magnetische Codierung eine in der Fläche der nach aussen weisenden Seite der Dichtung radial umlaufende Abfolge von Abschnitten umfasst, wobei je zwei benachbarte Abschnitte eine unterschiedliche Magnetisierung aufweisen. Auf diese Weise ergibt sich eine hohe räumliche Auflösung der magnetischen Codierung.

Alternativ zu der Ausbildung der magnetischen Codierung durch mindestens einen Abschnitt, bei dem eine mechanische Beanspruchung der Welle ein Auftreten einer Magnetisierung bzw. eine Änderung einer bereits vorhandenen Magnetisierung hervorruft, kann die magnetische Codierung durch einen oder mehrere Permanentmagnete ausgebildet sein, die an der jeweiligen Stirnfläche des Innen- bzw. Außenrings bzw. der Seite der Dichtung angeordnet ist.

Vorzugsweise ist die magnetische Codierung durch mindestens einen Schwingkreis, ausgebildet, der elektromagnetische Strahlung abstrahlt, deren zeitlich veränderlicher magnetischer Anteil von dem Empfänger erfasst wird, wobei der Sender zugleich auch als Empfänger dienen kann, und wobei der Schwingkreis an der Stirnfläche des Innen- oder Außenrings bzw. der Seite der Dichtung angeordnet ist. Der Schwingkreis bewirkt weiter, dass das von dem Sender abgestrahlte elektromagnetische Feld gedämpft oder verzerrt wird, wobei die Änderung des von dem Sender abgestrahlten elektromagnetischen Feldes erfassbar ist. Besonders bevorzugt ist vorgesehen, dass der Sender bzw. Empfänger als Spule ausgebildet ist, und dass Schwingkreis durch die Spule nach Art einer induktiven Kopplung mit Energie versorgt und zum Abstrahlen der elektromagnetischen Strahlung angeregt wird.

Unabhängig von der Anordnung der magnetischen Codierung ist vorzugsweise vorgesehen, dass der Empfänger an einem Deckel angeordnet ist, und dass der Deckel das Wälzlager axial abschliesst. Der Deckel bietet dem Empfänger einen sicheren Halt und bietet einen optischen und mechanischen Abschluss sowie eine zusätzliche Sicherung des Wälzlagers gegen eindringende Verschmutzung.

Ist der Empfänger an einem Deckel angeordnet, ist vorzugsweise vorgesehen, dass der Deckel an einem der Bestandteile des Wälzlagers, insbesondere an dem Aussenring des Wälzlagers, mittels einer Nut festlegbar ist, so dass der Deckel und damit der Empfänger leicht montierbar und ggf. austauschbar angebracht ist.

Vorzugsweise ist vorgesehen, dass die magnetische Codierung in ein Korpus des Bestandteils des Wälzlagers eingeprägt ist. Hierbei wird die magnetische Codierung beispielsweise der Stirnseite des Lagerrings bzw. einer nach aussen weisenden Seitenfläche der Dichtung fest eingeprägt. Alternativ hierzu kann vorzugsweise vorgesehen sein, dass die magnetische Codierung an einem Korpus des Bestandteils des Wälzlagers als zusätzlicher Körper befestigt ist, so dass sich auch Wälzlager, deren Bestandteile aus einem nicht-magnetisierbaren Material bestehen, nachträglich mit einer magnetischen Codierung versehen lassen. Auch ist es möglich, die magnetische Codierung auszuwechseln.

Weitere Vorteile und Merkmale der Erfindung ergeben sich aus den abhängigen Ansprüchen sowie aus der Beschreibung eines bevorzugten Ausführungsbeispiels der Erfindung.

Die Erfindung wird im folgenden unter Bezugnahme auf die anliegenden Zeichnungen anhand eines bevorzugten Ausführungsbeispiels näher beschrieben und erläutert.

### Kurze Beschreibung der Zeichnungen

- Fig. 1: zeigt in Querschnittsansicht ein bevorzugtes Ausführungsbeispiel einer erfindungsgemässen Messanordnung mit einem bevorzugten Ausführungsbeispiel eines erfindungsgemässen Lagerrings als Bestandteil eines bevorzugten Ausführungsbeispiels eines erfindungsgemässen Wälzlagers, und
- Fig. 2: zeigt eine vergrößerte Darstellung des Abschnittes ,A' aus Figur 1.

### Detaillierte Beschreibung der Zeichnung

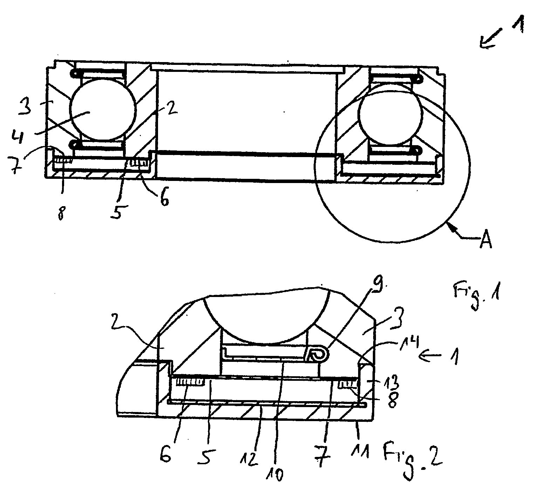

Fig. 1 zeigt ein Wälzlager 1, umfassend einen Innenring 2, einen Aussenring 3 sowie Wälzkörper 4. Auf einer Stirnfläche 5 des Innenrings 2 ist eine erste magnetische Codierung 6 aufgebracht. Weiter ist auf einer Stirnfläche 7 des Aussenrings 3 eine zweite magnetische Codierung 8 aufgebracht, wobei die zweite magnetische Codierung 8 durch acht in Umfangsrichtung umlaufend angeordnete magnetisierte Abschnitte der Stirnfläche 7 des Aussenrings 3 ausgebildet ist. Die erste magnetische Codierung 6 umfasst mehrere, im einzelnen nicht weiter erkennbare, in Umfangsrichtung angeordnete magnetische Abschnitte, bei denen je zwei benachbarte Abschnitte eine unterschiedliche Magnetisierung aufweisen, wobei jeder der Abschnitte kreisringsegmentförmig ausgebildet ist. Sind bei der zweiten magnetischen Codierung 8 die einzelnen magnetisierten Abschnitte durch nicht-magnetisierte Abschnitte voneinander getrennt, so grenzen bei der ersten magnetischen Codierung 6 benachbarte magnetisierte Abschnitte unmittelbar aneinander.

Nicht dargestellt ist eine Welle, die in dem Innenring 2 fest eingespannt und damit in dem Wälzlager 1 gelagert ist.

Fig. 2 zeigt abschnittsweise das Wälzlager 1 mit dem Innenring 2, dem Außenring 3 sowie einigen der Wälzkörper 4 sowie eine Dichtung 10, die als Dichtscheibe mit Dichtlippe 9 schematisch dargestellt ist. Das Wälzlager 1 umfasst weiter einen Deckel 11, an dem schematisch nur als Fläche abschnittsweise dargestellte Empfänger 12 angeordnet sind, wobei die Empfänger 12 die Magnetisierung der ersten magnetischen Codierung 6 bzw. der zweiten magnetischen Codierung 8 erfassen. Der Deckel 11 weist eine mittige Bohrung auf, durch die die Welle geführt ist. Der Deckel 11 kommt die Dichtung 10 überdeckend zu liegen, so dass die Empfänger 12 in einer Verlängerung der Achse der Welle angeordnet sind. Der der ersten magnetischen Codierung 6 bzw. der zweiten magnetischen Codierung 8 zugeordnete Abschnitt des Empfängers 12 ist jeweils parallel zu der Achse der Welle versetzt in kürzesten Abstand zu den beiden magnetischen Codierungen 6, 8 angeordnet. Der Deckel 11 weist an seinem Außenumfang eine axiale Verprägung 13 auf, die in eine zugeordnete Nut 14 an dem Außenring 3 bzw. an dem Innenring 2 greift, um den Deckel 11 an dem Außenring 3 bzw. an dem Innenring 2 zu befestigen, so dass die Verprägung 13 in der Nut 14 einrastet, und das Wälzlager 1 in axialer Richtung abschließt. Der Deckel 11 besteht auf einem nicht-magnetischen Material, beispielsweise Kunststoff, einer Keramik oder einem Metall.

In dem vorstehend beschriebenen Ausführungsbeispiel waren sowohl eine erste magnetische Codierung 6 als auch eine zweite magnetische Codierung 8 vorgesehen. Es versteht sich, dass eine einzige magnetische Codierung ausreichend ist.

Anstelle einer Befestigung der Empfänger 12 an dem Deckel 11, der an einem Bestandteil des Wälzlagers 1, nämlich dem Aussenring 3, angebracht ist, können die Empfänger 12 auch an dem Bauteil befestigt sein, an dem das Wälzlager 1 aufgenommen ist, beispielsweise, indem die Empfänger 12 wieder an einem Deckelteil aufgenommen sind, wobei das Deckelteil an dem das Wälzlager 1 aufnehmenden Bauteil angebracht ist.

In dem vorstehend beschriebenen Ausführungsbeispiel waren die magnetisierten Abschnitte der ersten magnetischen Codierung 6 bzw. der zweiten magnetischen Codierung 8 jeweils in das Korpus des Innenrings 2 bzw. des Aussenrings 3 eingeprägt. Es versteht sich, dass die jeweilige Codierung auch durch Körper ausgebildet sein kann, die auf die Stirnfläche des Korpus des betreffenden Lagerbestandteils, sei es eines der beiden Lagerringe oder der Dichtung, aufgebracht sind, sofern die Körper dem magnetostriktiven Effekt unterliegen, also bei einer in dem Korpus des Körpers auftretenden mechanischen Spannung eine Änderung der Magnetisierung bzw. das Auftreten einer Magnetisierung zeigen. Es versteht sich ferner, dass, anstelle einzelner, baulich getrennt angeordneter Körper, auch ein einzelner Körper vorgesehen sein kann, der scheibenringförmig ausgebildet ist und flächig auf die Stirnfläche angebracht ist, wobei in radialer Richtung entlang des einzigen Körpers die Magnetisierung veränderlich ist.

Bei dem vorstehend beschriebenen Ausführungsbeispiel trat die Magnetisierung aufgrund des magnetostriktiven Effektes auf. Es versteht sich, dass die Magnetisierung auch durch einen oder mehrere Permanentmagnete gebildet sein kann, die an einer Stirnfläche des Innen- bzw. Außenrings des Lagers bzw. an der Dichtung des Lagers angeordnet sein können. Die magnetische Codierung 6 bzw. 8 entspricht dann der Anordnung der Permanentmagnete an der jeweiligen Stirnfläche 5 bzw. 7 des Innenrings 2 bzw. des Außenrings 3.

Alternativ oder ergänzend zu der Ausbildung der Magnetisierung durch den magnetostriktiven Effekt bei einem magnetisierbaren Abschnitt des Lagerbestandteils bzw. zu der Ausbildung der Magnetisierung durch einen oder mehrere Permanentmagnete kann die Magnetisierung auch durch ein am Ort des Empfängers 12 auftretendes Magnetfeld gebildet sein, wobei das Magnetfeld durch einen Schwingkreis hervorgerufen wird, der elektromagnetische Strahlung abstrahlt, deren Magnetfeld-Komponente durch den Empfänger als periodisch wechselndes Magnetfeld erfasst wird. In diesem Fall lässt sich aufgrund der Periodizität des erfassten Magnetfeldes des Schwingkreises dessen Anteil an dem an dem Ort des Empfängers erfassten Magnetfeld von Streufeldern, beispielsweise Beiträgen des Erdmagnetfeldes, auf beispielsweise elektronischen Wege abtrennen. Weiter ist es möglich, in der Dichtung eine metallische Armierung vorzusehen, die das Magnetfeld des Schwingkreises zwar dämpft, allerdings nicht vollständig abschirmt, so dass der verbleibende Anteil an dem Ort des Empfängers anhand der periodisch veränderlichen Feldstärke des Magnetfeldes erkennbar und dem Schwingkreis als Quelle des Magnetfeldes zuzuordnen bleibt. Der Schwingkreis als Sender des Magnetfeldes kann durch eine diesem zugeordnete Energieversorgung beaufschlagt werden; alternativ hierzu kann vorgesehen sein, die als Empfänger ausgebildete Spule so auszugestalten, dass die Spule den Schwingkreis versorgt und eine drahtlose Versorgung des Schwingkreises ausgebildet ist, so dass die Spule und der Schwingkreis induktiv gekoppelt sind. Hierbei überlagt sich das in der Spule vorhandene Magnetfeld mit dem Magnetfeld-Anteil des Schwingkreises im Bereich der als Empfänger vorgesehenen Spule, so dass es zu einer Überlagerung des Magnetfeldes der Spule mit dem Magnetfeldanteil des Schwingkreises kommt. Diese Überlagerung führt zu einer Verstimmung des Magnetfeldes der Spule, also einer Änderung in Phase und / oder Amplitude, wobei diese Änderung erfasst werden kann und eine Information für die relative Stellung des Schwingkreises zu dem Empfänger liefert. Der Schwingkreis bewirkt damit, dass das von der Spule abgestrahlte Feld gedämpft bzw. verzerrt wird, in jedem Fall also verändert wird, wobei die Veränderung des von der Spule abgestrahlten Feldes erfassbar ist und einen Rückschluss auf die Stellung des Schwingkreises relativ zu der Spule ermöglicht. Bei einer mechanischen Beanspruchung der Welle, speziell bei einer Drehung bzw. Translation der gelagerten Welle, ändert sich dabei das in der Spule empfangene Signal des Schwingkreises. Derartige Schwingkreise lassen sich auf bereits bestehende, ggf. in Einbaustellung befindliche Wälzlager bzw. Linear- oder Gleitlager bei Bedarf einfach montieren, so dass bereits fertige Lager auf einfache Weise nachgerüstet werden können.

Die Erfindung wurde vorstehend anhand eines Wälzlagers 1 beschrieben. Es versteht sich, dass auch eine andere Art von Lagern vorgesehen sein kann, beispielsweise Gleit- oder Linearlager, die eine gelagerte Welle fest eingespannt aufnehmen und beispielsweise an einem Ende eine Stirnfläche aufweisen, wobei die Stirnfläche eine Magnetisierung aufweist, sofern in dem Lager mechanische Spannungen auftreten.

### Bezugszeichenliste

- 1: Wälzlager
- 2: Innenring
- 3: Außenring
- 4: Wälzkörper
- 5: Stirnfläche des Innenrings 2
- 6: erste magnetische Codierung
- 7: Stirnfläche des Außenrings 3
- 8: zweite magnetische Codierung
- 9: Dichtlippe
- 10: Dichtung
- 11: Deckel
- 12: Empfänger
- 13: Verprägung
- 14: Nut

## Patentansprüche

1. Messanordnung für eine in einem Lager gelagerte Welle, wobei die Messanordnung eine magnetische Codierung (6; 8) sowie einen Empfänger (12) umfasst, und wobei die magnetische Codierung (6; 8) an einer Stirnfläche (5; 7) eines Bestandteils des Lagers angeordnet ist, **dadurch gekennzeichnet, dass** die Messanordnung derart ausgebildet ist, dass bei einer mechanischen Beanspruchung der gelagerten Welle die mechanischen Spannungen sich auf das mit der Welle verbundene Bestandteil des Lagers übertragen und der Empfänger (12) eine Änderung des Magnetfelds der magnetischen Codierung (6; 8) an dem Bestandteil des Lagers erfasst.

2. Messanordnung nach Anspruch 1, **dadurch gekennzeichnet, dass** das Lager als Wälzlager (1) ausgebildet ist und einen Außenring (3) als Bestandteil umfasst, und dass die magnetische Codierung (8) an einer Stirnfläche (7) des Außenrings angeordnet ist.

3. Messanordnung nach Anspruch 1, **dadurch gekennzeichnet, dass** das Lager als Wälzlager (1) ausgebildet ist und einen Innenring (2) als Bestandteil umfasst, und dass die magnetische Codierung (6) an einer Stirnfläche (5) des Innenrings (2) angeordnet ist.

4. Messanordnung nach einem der Ansprüche 2 oder 3, **dadurch gekennzeichnet, dass** die magnetische Codierung (6; 8) eine in der Stirnfläche (5; 7) radial umlaufende Abfolge von Bereichen (9) umfasst, wobei je zwei benachbarte Bereiche eine unterschiedliche Magnetisierung aufweisen.

5. Messanordnung nach einem der Ansprüche 1 bis 4, **dadurch gekennzeichnet, dass** das Lager, insbesondere das Wälzlager (1), als Bestandteil eine Dichtung (11) umfasst, und dass die magnetische Codierung an einer Seite der Dichtung (11) angeordnet ist.

6. Messanordnung nach Anspruch 5, **dadurch gekennzeichnet, dass** die magnetische Codierung eine in einer Fläche der nach außen weisenden Seite der Dichtung (11) radial umlaufende Abfolge von Abschnitten umfasst, wobei je zwei benachbarte Abschnitte eine unterschiedliche Magnetisierung aufweisen.

7. Messanordnung nach einem der Ansprüche 1 bis 6, **dadurch gekennzeichnet, dass** der Empfänger (12) an einem Deckel (11) angeordnet ist, und dass der Deckel (11) das Lager, insbesondere das Wälzlager (1), axial abschließt.

8. Messanordnung nach Anspruch 7, **dadurch gekennzeichnet, dass** der Deckel (11) an einem der Bestandteile des Lagers, insbesondere des Wälzlagers (1), insbesondere an dem Außenring (3) des Wälzlagers (1), mittels einer Nut (14) festlegbar ist.

9. Messanordnung nach einem der Ansprüche 1 bis 8, **dadurch gekennzeichnet, dass** der Empfänger (12) in einer Verlängerung der Achse der Welle angeordnet ist.

10. Messanordnung nach einem der Ansprüche 1 bis 9, **dadurch gekennzeichnet, dass** die magnetische Codierung (6; 8) in ein Korpus des Bestandteils des Wälzlagers (1), insbesondere in einen Lagerring des Wälzlagers (1), eingeprägt ist.

11. Messanordnung nach einem der Ansprüche 1 bis 9, **dadurch gekennzeichnet, dass** die magnetische Codierung an einem Korpus des Bestandteils des Wälzlagers als zusätzlicher Körper befestigt ist.

12. Messanordnung nach einem der Ansprüche 1 bis 9, **dadurch gekennzeichnet, dass** die magnetische Codierung mindestens einen Schwingkreis als Signalgeber des Empfängers umfasst, und dass der Empfänger den magnetischen Anteil der von dem Schwingkreis abgestrahlten elektromagnetischen Strahlung oder das durch den Schwingkreis veränderte, beispielsweise gedämpfte, Feld des Signalgebers erfasst.

13. Messanordnung nach Anspruch 12, **dadurch gekennzeichnet, dass** der Empfänger als magnetische Spule ausgebildet ist, und dass die magnetische Spule den Schwingkreis nach Art einer induktiven Kopplung mit Leistung versorgt.

## Claims

1. Measurement arrangement for a shaft which is mounted in a bearing, wherein the measurement arrangement comprises a magnetic coding (6; 8) and a receiver (12), and wherein the magnetic coding (6; 8) is arranged on an end surface (5; 7) of a component of the bearing, **characterized in that** the measuring arrangement is formed in such a way that, when a mechanical load is applied to the mounted shaft, the mechanical stresses are transmitted to that component of the bearing which is connected to the shaft and the receiver (12) detects a change in the magnetic field of the magnetic coding (6; 8) on the component of the bearing.

2. Measurement arrangement according to Claim 1, **characterized in that** the bearing is in the form of a roller bearing (1) and comprises an outer ring (3) as a component, and **in that** the magnetic coding (8) is arranged on an end surface (7) of the outer ring.

3. Measurement arrangement according to Claim 1, **characterized in that** the bearing is in the form of a roller bearing (1) and comprises an inner ring (2) as a component, and **in that** the magnetic coding (6) is arranged on an end surface (5) of the inner ring (2).

4. Measurement arrangement according to one of Claims 2 or 3, **characterized in that** the magnetic coding (6; 8) comprises a sequence of areas (9) which are radially circumferential in the end, surface (5; 7), wherein two adjacent areas in each case have different magnetization.

5. Measurement arrangement according to one of Claims 1 to 4, **characterized in that** the bearing, in particular the roller bearing (1), comprises a seal (11) as a component, and **in that** the magnetic coding is arranged on one side of the seal (11).

6. Measurement arrangement according to Claim 5, **characterized in that** the magnetic coding comprises a sequence of sections which are radially circumferential in one surface of that side of the seal (11) which faces outward, wherein two adjacent sections in each case have different magnetization.

7. Measurement arrangement according to one of Claims 1 to 6, **characterized in that** the receiver (12) is arranged on a cover (11), and **in that** the cover (11) axially closes the bearing, in particular the roller bearing (1).

8. Measurement arrangement according to Claim 7, **characterized in that** the cover (11) can be fixed by means of a groove (14) to one of the components of the bearing, in particular of the roller bearing (1), in particular to the outer ring (3) of the roller bearing (1).

9. Measurement arrangement according to one of Claims 1 to 8, **characterized in that** the receiver (12) is arranged on an extension of the axis of the shaft.

10. Measurement arrangement according to one of Claims 1 to 9, **characterized in that** the magnetic coding (6; 8) is stamped into a body of the component of the roller bearing (1), in particular into a bearing ring of the roller bearing (1).

11. Measurement arrangement according to one of Claims 1 to 9, **characterized in that** the magnetic coding is attached as an additional body to a body of the component of the roller bearing.

12. Measurement arrangement according to one of Claims 1 to 9, **characterized in that** the magnetic coding comprises at least one resonant circuit as a signal transmitter for the receiver, and **in that** the receiver detects the magnetic component of the electromagnetic radiation emitted from the resonant circuit, or the field, for example the damped field, of the signal transmitter which is changed by the resonant circuit.

13. Measurement arrangement according to Claim 12, **characterized in that** the receiver is in the form of a magnetic coil, and **in that** the magnetic coil supplies the resonant circuit with power in the form of inductive coupling.

## Revendications

1. Agencement de mesure pour un arbre supporté dans un palier, l'agencement de mesure comprenant un codage magnétique (6 ; 8) et un récepteur (12), et le codage magnétique (6 ; 8) étant disposé au niveau d'une surface frontale (5 ; 7) d'un constituant du palier, **caractérisé en ce que** l'agencement de mesure est réalisé de telle sorte que dans le cas d'une sollicitation mécanique de l'arbre supporté dans le palier, les contraintes mécaniques soient transmises au constituant du palier connecté à l'arbre et que le récepteur (12) détecte une variation du champ magnétique du codage magnétique (6 ; 8) au niveau du constituant du palier.

2. Agencement de mesure selon la revendication 1, **caractérisé en ce que** le palier est réalisé sous forme de palier à roulement (1) et comprend une bague extérieure (3) en tant que constituant, et **en ce que** le codage magnétique (8) est disposé au niveau d'une surface frontale (7) de la bague extérieure.

3. Agencement de mesure selon la revendication 1, **caractérisé en ce que** le palier est réalisé sous forme de palier à roulement (1) et comprend une bague intérieure (2) en tant que constituant, et **en ce que** le codage magnétique (6) est disposé au niveau d'une surface frontale (5) de la bague intérieure (2).

4. Agencement de mesure selon l'une quelconque des revendications 2 ou 3, **caractérisé en ce que** le codage magnétique (6 ; 8) comprend une succession de régions (9), radialement périphérique dans la surface frontale (5 ; 7), à chaque fois deux régions adjacentes présentant une aimantation différente.

5. Agencement de mesure selon l'une quelconque des revendications 1 à 4, **caractérisé en ce que** le palier, en particulier le palier à roulement (1), comprend en tant que constituant un joint d'étanchéité (11) et **en ce que** le codage magnétique est disposé au niveau d'un côté du joint d'étanchéité (11).

6. Agencement de mesure selon la revendication 5, **caractérisé en ce que** le codage magnétique comprend une succession de portions, radialement périphérique dans une surface du côté du joint d'étanchéité (11) tourné vers l'extérieur, à chaque fois deux portions adjacentes présentant une aimantation différente.

7. Agencement de mesure selon l'une quelconque des revendications 1 à 6, **caractérisé en ce que** le récepteur (12) est disposé au niveau d'un couvercle (11) et **en ce que** le couvercle (11) ferme axialement le palier, en particulier le palier à roulement (1).

8. Agencement de mesure selon la revendication 7, **caractérisé en ce que** le couvercle (11) peut être fixé au niveau de l'un des constituants du palier, en particulier du palier à roulement (1), en particulier au niveau de la bague extérieure (3) du palier à roulement (1), au moyen d'une rainure (14).

9. Agencement de mesure selon l'une quelconque des revendications 1 à 8, **caractérisé en ce que** le récepteur (12) est disposé dans un prolongement de l'axe de l'arbre.

10. Agencement de mesure selon l'une quelconque des revendications 1 à 9, **caractérisé en ce que** le codage magnétique (6 ; 8) est marqué dans un corps du constituant du palier à roulement (1), en particulier dans une bague de palier du palier à roulement (1).

11. Agencement de mesure selon l'une quelconque des revendications 1 à 9, **caractérisé en ce que** le codage magnétique est fixé sur un corps du constituant du palier à roulement en tant que corps supplémentaire.

12. Agencement de mesure selon l'une quelconque des revendications 1 à 9, **caractérisé en ce que** le codage magnétique comprend au moins un circuit oscillant en tant que capteur de signaux du récepteur, et **en ce que** le récepteur détecte la partie magnétique du rayonnement électromagnétique émis par le circuit oscillant ou le champ du capteur de signaux modifié, par exemple amorti, par le circuit oscillant.

13. Agencement de mesure selon la revendication 12, **caractérisé en ce que** le récepteur est réalisé sous forme de bobine magnétique, et **en ce que** la bobine magnétique alimente en puissance le circuit oscillant à la manière d'un couplage inductif.
